# EUROPEAN PATENT SPECIFICATION

(11) **EP 0 616 413 B1**
(45) Date of publication and mention of the grant of the patent: **07.01.1998**
(21) Application number: 94200643.8
(22) Date of filing: 14.03.1994
(51) Int. Cl.: H02M 3/337, H02M 7/48

(54) **Power supply comprising at least two switching bridges**
Leistungsversorgung mit mindestens zwei schaltenden Brücken
Alimentation comprenant au moins deux ponts commutants

(30) Priority: 19.03.1993 EP 93200812
(43) Date of publication of application: 21.09.1994
(73) Proprietor: Philips Electronics N.V., 5621 BA Eindhoven (NL)
(72) Inventor: Carlsson, Ulf Gunnar, NL-5656 AA Eindhoven (NL); Buffin, Alex Florent Raymond, NL-5656 AA Eindhoven (NL); Miller, Marcel, NL-5656 AA Eindhoven (NL)
(74) Representative: Bakker, Hendrik

(56) References cited:
- EP-A- 0 390 184
- PATENT ABSTRACTS OF JAPAN vol. 013 no. 176 (E-749) ,25 April 1989 & JP-A-01 005359 (MITSUBISHI ELECTRIC CORP) 10 January 1989,

## Description

The invention relates to a switching power supply for converting a mains voltage supplied by an electric mains into a desired output voltage, comprising:
a) an input circuit for converting the mains voltage into a direct voltage,
b) at least two bridge circuits, each of which comprises four branches which include switching elements with control electrodes and a primary winding of a transformer, each of said bridge circuits comprising two input terminals which are connected to the input circuit,
c) a control circuit for generating control signals, which control circuit comprises output terminals which are connected to the control electrodes of the switching elements,
d) coupling means, comprising at least a transformer core of a soft-magnetic material, for coupling the primary transformer windings of the bridge circuits to one another,
e) an output circuit comprising at least a secondary transformer winding which is coupled, *via* the transformer core, to at least one of the primary transformer windings, the coupling means comprising a transformer core which is common to at least two bridge circuits and on which there are provided the primary transformer windings associated with the relevant bridge circuits and a common secondary transformer winding in such a manner that the primary transformer windings are rigidly coupled to one another, the input terminals of the relevant bridge circuits being electrically connected in series so that the bridge circuits together constitute a switching unit comprising two input terminals.

A power supply of this kind is known from Philips Power Systems Catalog 1993, pp. 22-23. The known apparatus comprises two bridge circuits whose primary transformer windings are coupled to one another *via* the common transformer core. As a result, the voltage across these transformer windings is always the same, and hence also the input voltage of both bridge circuits. When the apparatus is connected, *via* the input circuit, for example, to a three-phase mains, the direct voltage produced by the input circuit is comparatively high. Thanks to the fact that the input voltage of each of the bridge circuits amounts to exactly half this high input voltage, comparatively inexpensive standard switching elements which are not suitable for extremely high voltages can be used in the bridge circuits. The power to be delivered by the power supply is limited mainly by the temperature rise in the transformer. For higher powers a larger transformer could be chosen, but the volume and cost of the power supply then increase disproportionately.

It is an object of the invention to provide a power supply of the kind set forth which is suitable to deliver higher powers in comparison with the known apparatus and in which the dimensions and cost price of the transformers used remain limited. To achieve this, a first embodiment of the invention is characterized in that there are provided at least two switching units which comprise equal numbers of bridge circuits, the input terminals of said switching units being electrically connected in parallel and the secondary transformer windings associated with each of said switching units being electrically connected in series. In this embodiment an arbitrary number of switching units can be electrically connected in parallel, the series connection of the secondary windings ensuring that all primary windings carry the same current so that all bridge circuits make the same contribution to the total power of the power supply.

A second embodiment of the invention is characterized in that each bridge circuit associated with the switching unit comprises at least two primary transformer windings which are provided on separate transformer cores, on each of said transformer cores there being provided a secondary transformer winding, said secondary transformer windings being electrically connected in series. Because each bridge circuit of this embodiment comprises two transformers, the power can be doubled. In this embodiment all primary windings are also forced to carry the same current.

These and other aspects of the invention will be described in detail hereinafter with reference to the drawing.
Fig. 1 shows a diagram of a known power supply on which the power supply in accordance with the invention is based,
Fig. 2 shows a diagram of a version of a first embodiment of the power supply in accordance with the invention, and
Fig. 3 shows a diagram of a version of a second embodiment of the power supply in accordance with the invention.

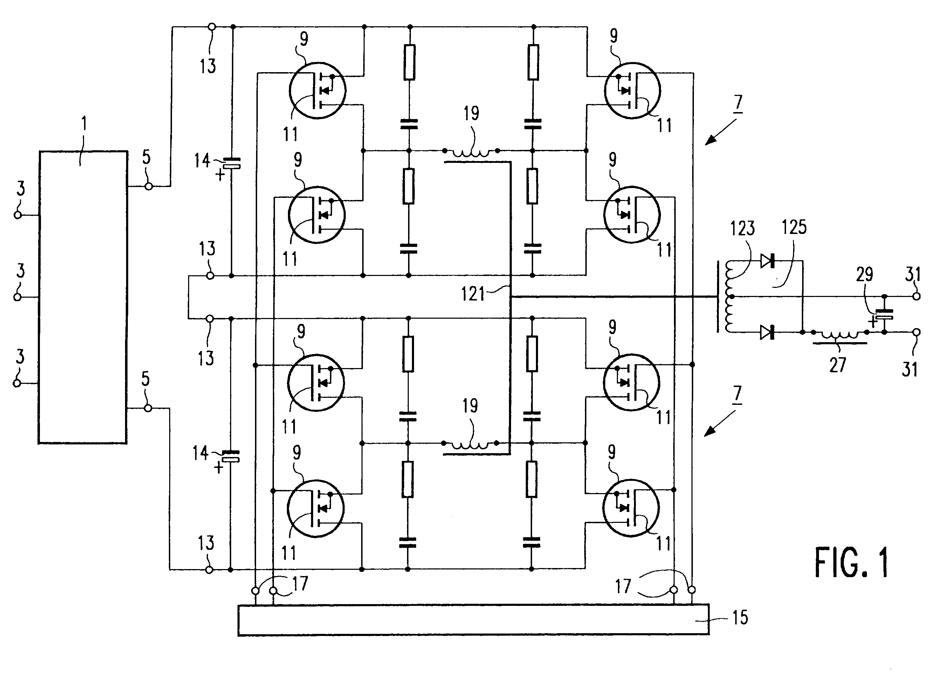

The power supply which is diagrammatically shown in Fig. 1 comprises a known input circuit 1 whereto a mains voltage, for example a three-phase voltage of 380 V, can be applied *via* three input terminals 3, said mains voltage being converted into a desired output voltage by the power supply. The input circuit 1 then comprises a three-phase rectifier. The input circuit may also be adapted for connection to a single-phase mains, in which case it comprises two input terminals 3 and a simple rectifier bridge with or without a smoothing filter, for example as described in US-A-4 916 599. The input circuit 1 comprises output terminals 3 on which a direct voltage is available.

The apparatus also comprises two bridge circuits 7 of identical construction. Each bridge circuit 7 comprises four branches, each of which comprises *inter alia* a switching element 9 which in the present embodiment is formed by a MOSFET whose gate 11 serves as the control electrode of the switching element. If desired, other known types of switching elements can also be used, for example bipolar transistors, thyristors and GTOs. Each bridge circuit 7 comprises two input terminals 13 which are connected to the output terminals 5 of the input circuit 1. Between the two input terminals 13 of each bridge circuit 7 there is connected a capacitor 14 which serves as a buffer wherefrom the bridge circuit derives its supply voltage. A control circuit 15 serves to generate control signals for the switching elements 9. These control signals are available *via* output terminals 17 of the control circuit 15 which are connected to the control electrodes 11 of the switching elements 9. Finally, each bridge circuit 7 includes a primary winding 19 of a transformer. In each bridge circuit 7 the switching elements 9 shown at the top left and bottom right in Fig. 1 constitute a first pair, the other two switching elements constituting a second pair. The control circuit 15 controls the switching elements 9 so that in each bridge circuit 7 the switching elements of the first pair and those of the second pair are alternately electrically conductive, so that the current direction in the primary transformer winding 19 is alternately from left to right and from right to left. Many suitable embodiments of bridge circuits 7 and the control circuit 15 are known; an example is described in US-A-4 916 599.

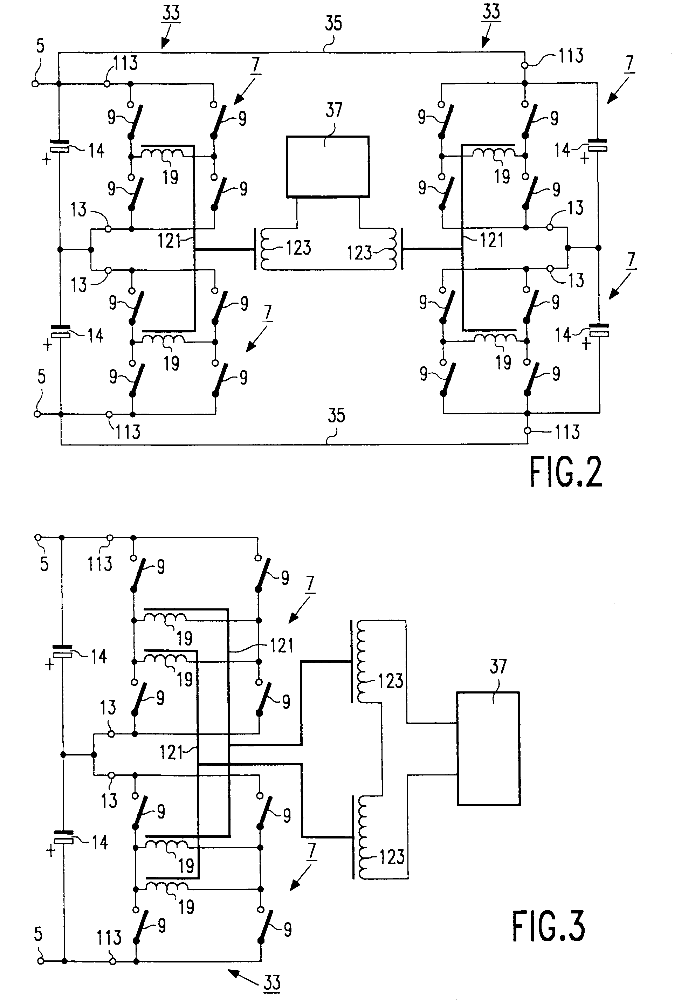

The primary transformer windings 19 of the two bridge circuits 7 are provided on and magnetically coupled to a common transformer core 121 on which there is also provided a common secondary transformer winding 123 which constitutes, in conjunction with a rectifier circuit 125 and a filter 27, 29, an output circuit whose output terminals 31 carry a direct voltage. The primary transformer windings 19 are rigidly coupled to one another *via* the transformer core 121. Thanks to this rigid coupling and the fact that the numbers of turns of the two primary transformer windings 19 are equal, the voltage across the two windings is also the same in all circumstances. The powers delivered by the two bridge circuits, therefore, are also the same. The input terminals 13 of the two bridge circuits 7 are electrically connected in series, *i.e.* the positive input terminal of one bridge circuit is connected to the negative input terminal of the other bridge circuit. The buffer capacitors 14 at the inputs of the bridge circuits 7, therefore, are also connected in series and constitute a capacitive voltage divider. As a result of the fact that the voltages across the two primary transformer windings 19 are always the same, the voltages across the two buffer capacitors 14 are also equal. This is important notably when the input circuit 1 is adapted to be connected to a 380 V three-phase mains *via* its input terminals 3. The input circuit 1 then delivers a direct voltage of 540 V *via* the output terminals 5. This voltage is too high for the customary MOSFETs, so that it is important that the input voltage of each bridge circuit 7 amounts to exactly half the output voltage of the input circuit 1. Two or more bridge circuits 7 which are interconnected, *via* a common transformer core 121, in the manner shown in the Figs. 2 and 3 together constitute a switching unit. Such switching units in accordance with the invention can serve as a basis for power supplies suitable for delivering high powers.

Fig. 2 shows diagrammatically an embodiment of a power supply which comprises two switching units 33, each of which comprises two electrically series-connected bridge circuits 7. For simplicity of the Figure, the switching elements 9 are symbolically represented as simple switches. For the same reasons, the input circuit 1 and the control circuit 15 are not shown in this Figure. Each switching unit 33 comprises two input terminals 113 which coincide with the first and the last input terminal 13 of the series connection of the relevant bridge circuits 7. The input terminals 113 of the switching units 33 are electrically connected in parallel *via* connection leads 35, and the secondary transformer windings 123 associated with each of the switching units are electrically connected in series. The series connection of the secondary transformer windings 123 is connected to a circuit 37. Analogous to the embodiment shown in Fig. 1, the circuit 37 may comprise a rectifier circuit but it may also be an external apparatus which is supplied with an alternating voltage by the power supply.

In the embodiment shown in Fig. 2, all primary transformer windings 19 comprise the same numbers of turns, like the secondary transformer windings 123. As a result, the currents in and the voltages across all primary transformer windings 19 are equal and all bridge circuits make the same contribution to the power supplied by the power supply. As a result, the power supply can deliver a power which is four times higher than in the case of a single bridge circuit 7. When an even higher power is desired, the number of bridge circuits 7 can be readily increased by incorporating more bridge circuits per switching unit 33 and/or by interconnecting more switching units in the described manner.

Fig. 3 shows a second embodiment which comprises a switching unit 33 with a number of bridge circuits (in this case two) whose input terminals 13 are electrically connected in series. The first input terminal 13 of the first bridge circuit 7 in the series and the last input terminal of the last bridge circuit in the series again constitute the input terminals 113 of the switching unit 33. The representation of the power supply has been simplified in the same way as in Fig. 2.

In the embodiment shown in Fig. 3, each bridge circuit 7 forming part of the switching unit 33 comprises two primary transformer windings 19 provided on separate transformer cores 121. Each of these transformer cores 121 is coupled to primary transformer windings 19 (two in the present embodiment) associated with different bridge circuits 7. On each of these transformer cores 121 there is provided a secondary transformer winding 123, said secondary transformer windings being electrically connected in series. Like in the embodiment shown in Fig. 2, this series connection is connected to a circuit 37. The numbers of turns of all primary transformer windings 19 are equal, like the numbers of turns of all secondary transformer windings 123.

In the embodiment shown in Fig. 3, the currents through and the voltages across all primary transformer windings 19 are equal for the same reasons as stated for the embodiment shown in Fig. 2. In the present embodiment each bridge circuit 7, however, comprises two primary transformer windings 19 provided on separate transformer cores 121, so that each bridge circuit can deliver twice as much power as a bridge circuit according to Fig. 2. Therefore, the power to be delivered by the power supplies shown in the Figs. 2 and 3 is approximately equal, whereas the apparatus shown in Fig. 3 comprises fewer components (switching elements 9) and hence can be less expensive and more compact. The number of bridge circuits 7 in this embodiment can again be increased as desired.

## Claims

1. A switching power supply for converting a mains voltage supplied by an electric mains into a desired output voltage, comprising:
a) an input circuit (1) for converting the mains voltage into a direct voltage,
b) at least two bridge circuits (7), each of which comprises four branches which include switching elements (9) with control electrodes (11) and a primary winding (19) of a transformer, each of said bridge circuits comprising two input terminals (13) which are connected to the input circuit,
c) a control circuit (15) for generating control signals, which control circuit comprises output terminals (17) which are connected to the control electrodes of the switching elements,
d) coupling means, comprising at least a transformer core (121) of a soft-magnetic material for coupling the primary transformer windings of the bridge circuits to one another,
e) an output circuit comprising at least a secondary transformer winding (123) which is coupled *via* the transformer core, to at least one of the primary transformer windings, the coupling means comprising a transformer core which is common to at least two bridge circuits and on which there are provided the primary transformer windings associated with the relevant bridge circuits and a common secondary transformer winding in such a manner that the primary transformer windings are rigidly coupled to one another, the input terminals of the relevant bridge circuits being electrically connected in series so that the bridge circuits together constitute a switching unit (33) comprising two input terminals (113),
characterized in that there are provided at least two switching units (33) which comprise equal numbers of bridge circuits (7), the input terminals (113) of said switching units being electrically connected in parallel and the secondary transformer windings (123) associated with each of said switching units being electrically connected in series.

2. A switching power supply for converting a mains voltage supplied by an electric mains into a desired output voltage, comprising:
a) an input circuit (1) for converting the mains voltage into a direct voltage,
b) at least two bridge circuits (7), each of which comprises four branches which include switching elements (9) with control electrodes (11) and a primary winding (19) of a transformer, each of said bridge circuits comprising two input terminals (13) which are connected to the input circuit,
c) a control circuit (15) for generating control signals, which control circuit comprises output terminals (17) which are connected to the control electrodes of the switching elements,
d) coupling means, comprising at least a transformer core (121) of a soft-magnetic material for coupling the primary transformer windings of the bridge circuits to one another,
e) an output circuit comprising at least a secondary transformer winding (123) which is coupled, *via* the transformer core, to at least one of the primary transformer windings, the coupling means comprising a transformer core which is common to at least two bridge circuits and on which there are provided the primary transformer windings associated with the relevant bridge circuits and a common secondary transformer winding in such a manner that the primary transformer windings are rigidly coupled to one another, the input terminals of the relevant bridge circuits being electrically connected in series so that the bridge circuits together constitute a switching unit (33) comprising two input terminals (113), characterized in that each bridge circuit associated with the switching unit (33) comprises at least two primary transformer windings (19) which are provided on separate transformer cores (121), on each of said transformer cores there being provided a secondary transformer winding (123), said secondary transformer windings being electrically connected in series.

## Patentansprüche

1. Schaltende Speiseschaltung zum Umwandeln einer aus einem elektrischen Versorgungsnetz gelieferten Netzspannung in eine gewünschte Ausgangsspannung, mit:
a) einer Eingangsschaltung (1) zum Umwandeln der Netzspannung in eine Gleichspannung,
b) mindestens zwei Brückenschaltungen (7) mit je vier Zweigen, in denen Schaltelemente (9) mit Steuerelektroden (11) vorgesehen sind sowie einer Primärwicklung (19) eines Transformators, wobei diese Brückenschaltungen mit je zwei Eingangsanschlüssen (13) versehen sind, die mit der Eingangsschaltung verbunden sind,
c) einer Steuerschaltung (15) zum Erzeugen von Steuersignalen, wobei diese Steuerschaltung mit Ausganganschlüssen (17) versehen ist, die mit den Steuerelektroden der Schaltelemente verbunden sind,
d) Kopplungsmitteln mit mindestens einem Transformatorkern (121) aus weichmagnetischem Material zum miteinander Koppeln der primären Transformatorwicklungen der Brückenschaltungen,
e) einer Ausgangsschaltung mit mindestens einer sekundären Transformatorwicklung (123), die über den Transformatorkern mit mindestens einer der primären Transformatorwicklungen gekoppelt ist, wobei die Kopplungsmittel einen für wenigstens zwei Brückenschaltungen gemeinsamen Transformatorkern haben, auf dem die den betreffenden Brückebschaltungen zugehörenden primären Transformatorwicklungen und eine gemeinsame sekundäre Transformatorwicklung derart angeordnet sind, daß die primären Transformatorwicklungen fest miteinander gekoppelt sind, und wobei die Eingangsanschlüsse der betreffenden Brückenschaltungen elektrisch in Reihe geschaltet sind, so daß die Brückenschaltungen zusammen eine Schalteinheit (33) mit zwei Eingangsanschlüssen (113) bilden,
dadurch gekennzeichnet, daß es wenigstens zwei Schalteinheiten (33) gibt, die gleiche Anzahlen Brückenschaltungen (7) aufweisen, daß die Eingangsanschlüsse (113) der genannten Schalteinheiten elektrisch parallelgeschaltet sind und daß die zu jeder der genannten Schalteinheiten gehörenden sekundären Transformatorwicklungen (123) elektrisch in Reihe geschaltet sind.

2. Schaltende Speiseschaltung zum Umwandeln einer aus einem elektrischen Versorgungsnetz gelieferten Netzspannung in eine gewünschte Ausgangsspannung, mit:
a) einer Eingangsschaltung (1) zum Umwandeln der Netzspannung in eine Gleichspannung,
b) mindestens zwei Brückenschaltungen (7) mit je vier Zweigen, in denen Schaltelemente (9) mit Steuerelektroden (11) vorgesehen sind sowie einer Primärwicklung (19) eines Transformators, wobei diese Brückenschaltungen mit je zwei Eingangsanschlüssen (13) versehen sind, die mit der Eingangsschaltung verbunden sind,
c) einer Steuerschaltung (15) zum Erzeugen von Steuersignalen, wobei diese Steuerschaltung mit Ausganganschlüssen (17) versehen ist, die mit den Steuerelektroden der Schaltelemente verbunden sind,
d) Kopplungsmitteln mit mindestens einem Transformatorkern (121) aus weichmagnetischem Material zum miteinander Koppeln der primären Transformatorwicklungen der Brückenschaltungen,
e) einer Ausgangsschaltung mit mindestens einer sekundären Transformatorwicklung (123), die über den Transformatorkern mit mindestens einer der primären Transformatorwicklungen gekoppelt ist, wobei die Kopplungsmittel einen für wenigstens zwei Brückenschaltungen gemeinsamen Transformatorkern haben, auf dem die den betreffenden Brückebschaltungen zugehörenden primären Transformatorwicklungen und eine gemeinsame sekundäre Transformatorwicklung derart angeordnet sind, daß die primären Transformatorwicklungen fest miteinander gekoppelt sind, und wobei die Eingangsanschlüsse der betreffenden Brückenschaltungen elektrisch in Reihe geschaltet sind, so daß die Brückenschaltungen zusammen eine Schalteinheit (33) mit zwei Eingangsanschlüssen (113) bilden, dadurch gekennzeichnet, daß jede zu der Schalteinheit (33) gehörende Brückenschaltung mindestens zwei primäre Transformatorwicklungen (19) aufweist, die auf einzelnen Transformatorkernen (121) vorgesehen sind, und daß aufjedem dieser Transformatorkerne eine sekundäre Transformatorwicklung (123) vorgesehen ist, wobei diese sekundären Transformatorwicklungen elektrisch in Reihe geschaltet sind.

## Revendications

1. Alimentation à découpage pour convertir une tension du secteur fournie par un réseau électrique en une tension de sortie souhaitée, comprenant :
a) un circuit d'entrée (1) pour convertir la tension du secteur en une tension continue,
b) au moins deux circuits en pont (7), qui comportent chacun quatre branches comprenant des éléments de commutation (9) avec des électrodes de commande (11) et un enroulement primaire (19) d'un transformateur, chacun desdits circuits en pont comprenant deux bornes d'entrée (13) qui sont connectées au circuit d'entrée,
c) un circuit de commande (15) pour générer des signaux de commande, lequel circuit de commande comprend des bornes de sortie (17) qui sont connectées aux électrodes de commande des éléments de commutation,
d) des moyens de couplage, comprenant au moins un noyau de transformateur (121) en une matière magnétique douce pour coupler les enroulements primaires de transformateur des circuits en pont les uns aux autres,
e) un circuit de sortie comprenant au moins un enroulement secondaire de transformateur (123) qui est couplé via le noyau de transformateur, à au moins un des enroulements primaires de transformateur, les moyens de couplage comprenant un noyau de transformateur qui est commun au moins à deux circuits en pont et sur lequel sont prévus les enroulements primaires de transformateur associés aux circuits en pont en question et un enroulement secondaire de transformateur commun d'une manière telle ) que les enroulements primaires de transformateur soient couplés rigidement les uns aux autres, les bornes d'entrée des circuits en pont en question étant connectées électriquement en série, de telle sorte que les circuits en pont constituent ensemble une unité de commutation (33) comprenant deux bornes d'entrée (113), caractérisée en ce qu'au moins deux unités de commutation (33) sont prévues et comprennent des nombres égaux de circuits en pont (7), les bornes d'entrée (113) desdites unités de commutation étant connectées électriquement en parallèle et les enroulements secondaires de transformateur (123) associés à chacune desdites unités de commutation étant montés électriquement en série.

2. Alimentation à découpage pour convertir une tension secteur fournie par un réseau électrique en une tension de sortie souhaitée, comprenant :
a) un circuit d'entrée (1) pour convertir la tension secteur en une tension continue,
b) au moins deux circuits en pont (7), qui comportent chacun quatre branches comprenant des éléments de commutation (9) avec des électrodes de commande (11) et un enroulement primaire (19) d'un transformateur, chacun desdits circuits en pont comprenant deux bornes d'entrée (13) qui sont connectées au circuit d'entrée,
c) un circuit de commande (15) pour générer des signaux de commande, lequel circuit de commande comprend des bornes de sortie (17) qui sont connectées aux électrodes de commande des éléments de commutation,
d) des moyens de couplage, comprenant au moins un noyau de transformateur (121) en une matière magnétique douce pour coupler les enroulements primaires de transformateur des circuits en pont les uns aux autres,
e) un circuit de sortie comprenant au moins un enroulement secondaire de transformateur (123) qui est couplé via le noyau de transformateur à au moins un des enroulements primaires de transformateur, les moyens de couplage comprenant un noyau de transformateur qui est commun au moins à deux circuits en pont et sur lequel sont prévus les enroulements primaires de transformateur associés aux circuits en pont en question et un enroulement secondaire de transformateur commun d'une manière telle que les enroulements primaires de transformateur soient couplés rigidement les uns aux autres, les bornes d'entrée des circuits en pont en question étant connectées électriquement en série, de telle sorte que les circuits en pont constituent ensemble une unité de commutation (33) comprenant deux bornes d'entrée (113), caractérisée en ce que chaque circuit en pont associé à l'unité de commutation (33) comprend au moins 5 deux enroulements primaires de transformateur (19) qui sont prévus sur des noyaux de transformateur séparés (121), un enroulement secondaire de transformateur (123) étant monté sur chacun desdits noyaux de transformateur, et les enroulements secondaires de transformateur étant connectés électriquement en série.
